# EUROPÄISCHE PATENTSCHRIFT

(11) **EP 3 588 498 B1**
(45) Veröffentlichungstag und Bekanntmachung des Hinweises auf die Patenterteilung: **13.09.2023**
(21) Anmeldenummer: 19177803.4
(22) Anmeldetag: 03.06.2019
(51) Int. Cl.: G10L 21/0208, H04M 9/08

(54) **VERFAHREN ZUR UNTERDRÜCKUNG EINES AKUSTISCHEN NACHHALLS IN EINEM AUDIOSIGNAL**
METHOD FOR SUPPRESSING AN ACOUSTIC REVERBERATION IN AN AUDIO SIGNAL
PROCÉDÉ DE SUPPRESSION D'UNE RÉVERBÉRATION ACOUSTIQUE DANS UN SIGNAL AUDIO

(30) Priorität: 21.06.2018 DE 102018210143
(43) Veröffentlichungstag der Anmeldung: 01.01.2020
(73) Patentinhaber: Sivantos Pte. Ltd., Singapore 539775 (SG)
(72) Erfinder: ROSENKRANZ, Tobias Daniel, 91058 Erlangen (DE); DREßLER, Oliver, 90763 Fürth (DE)
(74) Vertreter: FDST Patentanwälte

(56) Entgegenhaltungen:
- EP-A2- 1 667 416
- WO-A1-2007/113283
- US-A1- 2006 072 766

## Beschreibung

Die Erfindung betrifft ein Verfahren zur Unterdrückung eines akustischen Nachhalls in einem Audiosignal.

Ein akustischer Nachhall entsteht meist in geschlossenen oder wenigstens teilweise geschlossenen Räumen infolge von vielfachen Reflexionen eines erzeugenden Schallereignisses an den Wänden eines Raumes sowie an anderen Objekten, welche im Raum vorhanden sind. Je nach Geometrie des Raumes und dessen Wände sowie je nach Art, Anzahl und Geometrie der im Raum vorhandenen Objekte variiert dabei die Abklingzeit des Nachhalls, welche zusätzlich noch von der Beschaffenheit der im Raum vorhandenen Oberflächen beeinflusst wird. Der Nachhall bildet hierbei im Gegensatz zum Echo, welches isoliert als eine Art "Wiederholung" des erzeugenden Schallereignisses wahrnehmbar ist, ein im Wesentlichen kontinuierliches "Nachklingen" des Schallereignisses.

Während für ein angenehmes Klangempfinden insbesondere von Musik ein Mindestmaß an Nachhall sogar erwünscht ist, um einem zu "trockenen", stakkatoartigen Klang entgegenzuwirken, so ist der akustische Nachhall für eine Verständlichkeit von Sprachbeiträgen oftmals nachteilig, da die charakteristischen Schallereignisse zur Unterscheidung insbesondere der einzelnen Konsonanten nur von sehr kurzer Dauer sind, und eine entsprechende Überlagerung mit dem Nachhall die spektrale Information dabei teils erheblich verfälschen kann. Je nach Abklingzeit kann dies sogar für eine Unterscheidung der Formanten zur Erkennung von Vokalen zu einem Problem werden.

In Hörgeräten, welche oftmals zum Ausgleich eines Hörverlustes des betreffenden Trägers eingesetzt werden, ist eine für den Träger möglichst gut verständliche Wiedergabe von Sprachbeiträgen durch Gesprächspartner des Trägers von besonders hoher Bedeutung, da ein Hörverlust bei einem fehlenden akustischen Verständnis eines Sprachbeitrages und dem damit einhergehenden für den Träger erkennbaren Informationsverlust als besonders deutlich und somit besonders unangenehm empfunden werden kann. Daher werden in Hörgeräten oftmals Techniken zur Verbesserung der Verständlichkeit von Sprachbeiträgen eingesetzt.

Gerade bei der Verwendung eines Hörgerätes kann nun jedoch ein akustischer Nachhall die so wichtige Sprachverständlichkeit in besonderem Maße beeinträchtigen: In Hörgeräten wird im Rahmen der dort erfolgenden, Träger-spezifischen Signalverarbeitung zum Ausgleich von dessen Hörverlust oftmals auch eine Dynamik-Kompression eines Eingangssignals angewandt, welches durch ein Mikrofon des Hörgerätes erzeugt wurde. Die Dynamik-Kompression soll hierbei insbesondere beitragen, leise Schalereignisse, welche vom Träger infolge seines Hörverlustes kaum oder nicht mehr wahrgenommen werden, bis zu einer ausreichenden Wahrnehmbarkeit hin zu verstärken, ohne dass hierbei dieselbe Verstärkung auch auf hinreichend laute Schallereignisse angewandt wird, welche vom Träger ohne größere Probleme wahrgenommen werden können, und somit eine weitere Verstärkung zu einer unangenehmen Lautstärke führen könnte.

Diese Dynamik-Kompression "komprimiert" jedoch auch den akustischen Nachhall, sodass dieser eine entsprechend höhere Verstärkung erfährt als das ihn erzeugende Schallereignis. Dadurch wird einerseits die Abklingzeit in der vorliegenden Umgebung durch den Träger als länger empfunden, und andererseits werden infolge der oben beschriebenen Zusammenhänge Sprachbeiträge in ihrer Verständlichkeit beeinträchtigt.

In der US 2006 / 0 072 766 A1 ist offenbart, einen Nachhall in einem Audiosignal durch das Einstellen einer Verstärkung inAbhängigkeit eines "Onset" zu unterdrücken. Hierfür wird die Verstärkung in Abhängigkeit einer spektralen Analyse ermittelt. Ein "Onset" kann dabei durch die Anwendung zweier Tiefpass-Filter mit zueinander unterschiedlichen Zeitkonstanten auf die Energie eines jeweiligen Frequenzbands des Audiosignals sowie eine Gleichrichtung der Differenz der tiefpass-gefilterten Signalenergien erkannt werden.

Der Erfindung liegt daher die Aufgabe zugrunde, ein Verfahren zur Unterdrückung eines akustischen Nachhalls in einem Audiosignal anzugeben, welches bei möglichst geringer rechnerischer Komplexität in Echtzeit durchführbar sein soll, und dabei ein möglichst realistisches Klangbild liefern soll.

Die genannte Aufgabe wird erfindungsgemäß gelöst durch ein Verfahren zur Unterdrückung eines akustischen Nachhalls in einem Audiosignal, wobei ein Audiosignal bereitgestellt wird, wobei eine erste Pegelmessung des Audiosignals, welche derart gewählt wird, dass die erste Pegelmessung ein exponentielles Abklingverhalten aufweist, und welche durch ein rekursives Tiefpass-Filter erster Ordnung implementiert wird, mit einer ersten Einregelzeit und mit einer ersten Abklingzeit durchgeführt wird, wobei wenigstens zeitweise während der ersten Pegelmessung eine zweite Pegelmessung des Audiosignals, welche derart gewählt wird, dass die zweite Pegelmessung ein exponentielles Abklingverhalten aufweist, und welche durch ein rekursives Tiefpass-Filter erster Ordnung implementiert wird, mit einer zur ersten Einregelzeit identischen zweiten Einregelzeit und mit einer zweiten Abklingzeit durchgeführt wird, welche größer ist als die erste Abklingzeit, wobei auf einen Beitrag eines Schallereignisses im Audiosignal hin ein akustischer Nachhall des Schallereignisses im Audiosignal durch ein Abschwächen des Audiosignals unterdrückt wird, und wobei das Abschwächen des Audiosignals zur Unterdrückung des akustischen Nachhalls im Audiosignal mittels einer monoton steigenden Funktion der Differenz aus der ersten Pegelmessung und der zweiten Pegelmessung gesteuert wird. Vorteilhafte und teils für sich gesehen erfinderische Ausgestaltungen sind Gegenstand der Unteransprüche und der nachfolgenden Beschreibung.

Unter einer Unterdrückung eines akustischen Nachhalls in einem Audiosignal ist hierbei insbesondere eine Unterdrückung derjenigen Signalbeiträge im Audiosignal umfasst, welche in der durch das Audiosignal abgebildeten realen akustischen Situation durch einen akustischen Nachhall entstehen. Das Audiosignal wird hierbei insbesondere mittels eines oder mehrerer elektroakustischer Wandler bereitgestellt, welche die besagte reale akustische Situation in ein oder mehrere insbesondere elektrische Signale umsetzen. Hierbei kann für das Bereitstellen des Audiosignals anhand des oder der so erzeugten, insbesondere elektrischen Signale noch eine Vorverarbeitung erfolgen, welche beispielsweise eine Digitalisierung, eine Verstärkung, eine Dynamik-Kompression oder auch eine Rauschunterdrückung umfassen kann. Unter einem akustischen Nachhall sind hierbei insbesondere Reflexionen von Schall eines erzeugenden Schallereignisses an Wänden und/oder Objekten, z.B. eines wenigstens teilweise geschlossenen Raumes, umfasst, wobei durch mehrfache Reflexionen des propagierenden Schalls, welcher vom Schallereignis erzeugt wurde, an einem festen Ort ein kontinuierliches oder ein nahezu kontinuierliches Abklingen des Schallereignisses entsteht.

Unter einer Pegelmessung ist vorliegend insbesondere umfasst, dass durch die Pegelmessung eine mathematische Funktion gebildet wird, bzw. dass die Pegelmessung als eine solche Funktion darstellbar ist, durch welche eine Amplitude des Audiosignals und/oder eine Einhüllende der Amplitude und/oder ein Betragsquadrat der Amplitude in bevorzugt streng monotoner Weise, und besonders bevorzugt wendepunktfrei auf einen entsprechenden Pegelwert abgebildet wird. Hierbei ist insbesondere auch auf solche Funktionen abzustellen, bei welchen der Zusammenhang zwischen ihrer Eingangsgröße und dem abgebildeten Pegelwert nicht nur logarithmischer Art ist, sondern vielmehr soll hier der Begriff einer Pegelmessung auch allgemeinere Funktionen mit einem geeigneten Monotonieverhalten umfassen.

Unter einer Durchführung der zweiten Pegelmessung des Audiosignals wenigstens zeitweise während der ersten Pegelmessung ist insbesondere umfasst, dass eine der beiden Pegelmessungen jeweils nur zu diskreten Zeitpunkten durchgeführt wird, welche über eine Diskretisierung im Rahmen einer Digitalisierung bei der Bereitstellung des Audiosignals hinausgehen kann, wobei die fehlenden Pegelwerte zwischen den so entstehenden, diskreten Stützstellen derart interpolierbar sind, dass über einen zu untersuchenden Zeitraum ein insbesondere kontinuierlicher Vergleich mit der anderen Pegelmessung ermöglicht wird. Bevorzugt sind jedoch beide Pegelmessungen kontinuierlich (im Rahmen der durch eine Digitalisierung vorgegebenen Diskretisierung) durchzuführen.

Unter einer Abklingzeit einer Pegelmessung ist hierbei insbesondere diejenige Zeit zu verstehen, welche nach einem Signalbeitrag im Audiosignal und einem entsprechenden Pegel-Ausschlag der Pegelmessung vergeht, bis die Pegelmessung bei Abwesenheit von weiteren Signalbeiträgen im Audiosignal auf null oder auf einen vorgegebenen Bruchteil des Pegel-Ausschlag abgesunken ist, also beispielsweise die Zeitkonstante T60 für eine Abnahme um 60 dB. Unter einer Einregelzeit einer Pegelmessung ist insbesondere diejenige Zeit zu verstehen, welche nach einem spontan einsetzenden, stationären Signalbeitrag im Audiosignal vergeht, bis die Pegelmessung eine vorgegebenen Anteil des asymptotischen Grenzwertes für den Signalpegel, welcher dem stationären Signalbeitrag entspricht, erreicht hat. Hierbei bedeutet eine kürzere Einregelzeit insbesondere eine schnellere Reaktion der Pegelmessung auf einen spontan einsetzenden Signalbeitrag im Audiosignal.

Insbesondere ist somit jeder der beiden Pegelmessungen eine Einregelzeit und eine Abklingzeit zugeordnet, wobei sich für das vorliegende Verfahren die erste Pegelmessung und die zweite Pegelmessung in wenigstens einer der beiden, ihnen jeweils zugeordneten Parameter Einregelzeit und Abklingzeit voneinander unterscheiden, wobei auch ein Unterschied sowohl in den Einregelzeiten als auch in den Abklingzeiten für die Pegelmessungen möglich ist. Insbesondere kann dabei die Einregelzeit der ersten Pegelmessung als erste Einregelzeit bezeichnet werden und die Abklingzeit der ersten Pegelmessung als erste Abklingzeit, wobei die entsprechenden, der zweiten Pegelmessung zugeordneten Parameter als zweite Einregelzeit bzw. zweite Abklingzeit bezeichnet werden können.

Es ergeben sich somit die drei Möglichkeiten, dass entweder die beiden Einregelzeiten identisch sind, während sich die erste Abklingzeit von der zweiten Abklingzeit unterscheidet, oder dass die beiden Abklingzeiten identisch sind, während sich die erste Einregelzeit von der zweiten Einregelzeit unterscheidet, oder dass sich die erste Abklingzeit von der zweiten Abklingzeit unterscheidet und dabei auch die erste Einregelzeit zur zweiten Einregelzeit unterschiedlich ist.

Unter einem Schallereignis ist insbesondere jedwedes schallerzeugende Ereignis in der realen akustischen Situation umfasst, welche durch das Audiosignal abgebildet wird und/oder zur Bereitstellung des Audiosignals mittels entsprechender Wandler umgesetzt wird, wobei dem schallerzeugenden Ereignis zeitlich ein klares Ende zugeordnet werden kann. Die Unterdrückung des akustischen Nachhalls des Schallereignisses im Audiosignal bedeutet in diesem Sinne insbesondere eine Unterdrückung derjenigen Signalbeiträge, welche in der realen akustischen Situation dem akustischen Nachhall des Schallereignisses entsprechen.

Das Abschwächen des Audiosignals zur Unterdrückung des akustischen Nachhalls kann hierbei insbesondere anhand eines entsprechenden Verstärkungs- bzw. Abschwächungs-Faktors erfolgen, wobei der besagte Faktor in Abhängigkeit der Differenz zwischen der ersten Pegelmessung und der zweiten Pegelmessung gesteuert wird.

Das vorgeschlagene Vorgehen erlaubt es, einen Beitrag eines Schallereignisses im Audiosignal von einem Beitrag im Audiosignal, welcher einem akustischen Nachhall des Schallereignisses entspricht, anhand der unterschiedlichen Pegelverläufe in der ersten bzw. zweiten Pegelmessung infolge der unterschiedlichen Abklingzeit bzw. der unterschiedlichen Einregelzeit voneinander zu unterscheiden, und dies für eine entsprechende Abschwächung zu nutzen.

Die erste Pegelmessung unterscheidet sich hierbei von der zweiten Pegelmessung wenigstens in der Abklingzeit oder in der Einregelzeit, oder in beiden genannten Zeitkonstanten. Für eine unterschiedliche Abklingzeit der beiden Pegelmessungen nimmt der Beitrag durch einen akustischen Nachhall in der Pegelmessung mit der kürzeren Abklingzeit schneller ab als in der Pegelmessung mit der längeren Abklingzeit. Liegt im Audiosignal kein selbstständiges Schallereignis mehr vor, sondern sind dort nur noch Beiträge des akustischen Nachhalls zu verzeichnen, vergrößert sich hierdurch die Differenz zwischen der ersten Pegelmessung und der zweiten Pegelmessung, was einerseits zur Steuerung der Abschwächung des Audiosignals derart verwendet werden kann, dass mit zunehmender Differenz das Audiosignal mehr abgeschwächt wird. Im Fall unterschiedlicher Einregelzeit verursacht ein plötzlich einsetzendes Schallereignis eine schlagartige Vergrößerung der Differenz der beiden Messungen, da die Pegelmessung mit der langsameren Einregelzeit erst später auf das einsetzende Schallereignis reagiert. Für unterschiedliche Einregelzeit kann somit eine plötzliche Vergrößerung der Differenz dahingehend zur Steuerung verwendet werden, dass die Abschwächung des Audiosignals weitgehend ausgesetzt bzw. nicht angewandt wird.

Das vorgeschlagene Verfahren kann insbesondere frequenzbandweise angewandt werden, d. h., dass das Audiosignal für die genannten Pegelmessungen in einzelne Frequenzbänder zerlegt wird, und somit die beiden Pegelmessungen jeweils frequenzbandweise gemäß der Zerlegung durchgeführt werden, und eine entsprechende Abschwächung des Audiosignals in den einzelnen Frequenzbändern jeweils unterschiedlich angesteuert werden kann. Dies trägt dem Umstand Rechnung, dass das Abklingen von akustischem Nachhall in einer gegebenen Umgebung eine teils erhebliche Frequenzabhängigkeit aufweisen kann, und es somit für bestimmte Frequenzbänder von Vorteil sein kann, keinerlei oder nur eine geringe Abschwächung auf das Audiosignal anzuwenden, um Veränderungen oder Verfälschungen des Audiosignals möglichst zu minimieren.

Erfindungsgemäß wird die erste Pegelmessung mit einer ersten Abklingzeit durchgeführt, und die zweite Pegelmessung mit einer zweiten Abklingzeit durchgeführt, welche größer ist als die erste Abklingzeit, wobei das Abschwächen des Audiosignals zur Unterdrückung des akustischen Nachhalls im Audiosignal durch eine monoton steigende Funktion der Differenz aus der ersten Pegelmessung und der zweiten Pegelmessung gesteuert wird. Liegt im Audiosignal nur noch der akustische Nachhall eines Schallereignisses vor, ohne dass dort Beiträge des Schallereignisses selbst zu verzeichnen sind, so ist der Signalverlauf im Audiosignal im Wesentlichen gegeben durch das Abklingverhalten, welches für die reale akustische Situation, die durch das Audiosignal abgebildet wird, charakteristisch ist. Durch die beiden unterschiedlichen Abklingzeiten für die erste Pegelmessung und die zweite Pegelmessung vergrößert sich bei den durch akustischen Nachhall bedingten Beiträgen im Audiosignal mit zunehmender Zeit die Differenz zwischen den beiden Pegelmessungen.

Diese Differenz kann nun als ein Indikator einerseits für eine Sicherheit herangezogen werden, dass die betreffenden Signalbeiträge wirklich durch akustischen Nachhall gegeben sind, und andererseits als Indikator für einen Zeitabstand zum den akustischen Nachhall erzeugenden Schallereignis herangezogen werden. Insofern kann nun im beschriebenen Fall der akustische Nachhall im Audiosignal derart unterdrückt werden, dass mit zunehmender Differenz zwischen den beiden Pegelmessungen das Audiosignal stärker unterdrückt wird - also die Abschwächung durch eine monoton steigende Funktion der Differenz beschrieben wird - da vorliegend davon ausgegangen wird, dass bei einer steigenden Differenz keine eigenständigen, neuen Signalbeiträge durch andere Schallereignisse als das den akustischen Nachhalls erzeugende vorliegen, und somit im Audiosignal nur noch der abklingende akustische Nachhall einen wesentlichen Beitrag liefert. Insbesondere, wenn das Audiosignal durch eine Dynamik-Kompression weiter zu verarbeiten ist, kann es hierbei von Vorteil sein, den akustischen Nachhall in der genannten Weise mit zunehmendem Ausklingen zu unterdrücken, damit das Ausklingen infolge der Dynamik-Kompression nicht künstlich angehoben und dadurch verlängert wird.

Erfindungsgemäß wird die erste Pegelmessung dabei mit einer ersten Einregelzeit durchgeführt, und die zweite Pegelmessung mit einer zur ersten Einregelzeit identischen zweiten Einregelzeit durchgeführt. Hierbei ist die zweite Abklingzeit größer als die erste Abklingzeit. Dies hat den Vorteil, dass Schallereignisse in beiden Pegelmessungen jeweils einen Pegel-Ausschlag mit demselben Einregelverhalten generieren, wodurch eigenständige Schallereignisse anhand der beiden Pegelmessungen erkannt werden können, was für die Steuerung der Unterdrückung des akustischen Nachhalls verwendet werden kann. Beispielsweise kann bei der bereits erwähnten Differenzbildung der beiden Pegelmessungen durch eine verschwindende Differenz der beiden Pegelmessung bei gleichzeitig hohen Pegel-Ausschlägen in beiden Pegelmessungen auf ein eigenständiges Schallereignis geschlossen werden, und in diesem Fall eine gegebenenfalls zur Unterdrückung eines vorher einsetzenden akustischen Nachhalls angewandte Abschwächung des Audiosignals ausgesetzt werden.

In einer vorteilhaften, nicht von der Erfindung umfassten Ausgestaltung wird die erste Pegelmessung mit einer ersten Einregelzeit und einer ersten Abklingzeit durchgeführt und die zweite Pegelmessung mit einer zur ersten Einregelzeit unterschiedlichen zweiten Einregelzeit und einer zur ersten Abklingzeit identischen zweiten Abklingzeit durchgeführt. Hierbei wird anhand einer Zunahme der Differenz zwischen der ersten Pegelmessung und der zweiten Pegelmessung auf ein Schallereignis geschlossen, wobei nach dem Beginn des Schallereignisses das Abschwächen des Audiosignals zur Unterdrückung des akustischen Nachhalls im Audiosignal mittels einer monoton fallenden Funktion der Differenz aus der ersten Pegelmessung und der zweiten Pegelmessung gesteuert wird. Ein Erkennen eines Schallereignisses kann hierbei insbesondere durch eine Zunahme der Differenz über einen vorgegebenen Schwellwert ausgelöst werden.

Wird in der beschriebenen Weise auf ein Schallereignis geschlossen, welches potenziell Signalbeiträge akustischen Nachhalls im Audiosignal hervorrufen könnte, so hat infolge der identischen Abklingzeit der beiden Pegelmessungen ein akustischer Nachhall - bei Abwesenheit von weiteren Signalbeiträgen - in beiden Pegelmessungen im Wesentlichen dasselbe Abklingverhalten, wodurch die Differenz der Pegelmessungen im Idealfall bei Einsetzen des Abklingverhaltens in beiden Pegelmessungen gegen Null geht. Beide Pegelmessungen gehen jeweils in ihr Abklingverhalten über, wenn der gemessene Pegel den real im Audiosignal vorliegenden akustischen Nachhall des Schallereignisses erreicht, und klingen dann mit dem akustischen Nachhall gemäß der gemeinsamen Abklingzeit beider Pegelmessungen ab. Insofern kann die Differenz der beiden Pegelmessungen dahingehend zur Steuerung der Unterdrückung des akustischen Nachhalls verwendet werden, dass nach einem erkannten Schallereignis eine abnehmende, insbesondere eine verschwindende Differenz als Indikator dafür herangezogen wird, dass keine weiteren Beiträge von eigenständigen Schallereignissen im Audiosignal vorliegen, sondern lediglich akustischer Nachhall, sodass eine Abschwächung des Audiosignals in maximalem Umfang angewandt wird. Eine veränderliche, insbesondere zunehmende Differenz nach einem erkannten Schallereignis kann seinerseits als Indikator dafür verstanden werden, dass noch weitere, kleinere Schallereignisse vorliegen, weswegen das Audiosignal bevorzugt noch nicht maximal zu unterdrücken ist.

Die Steuerung der Abschwächung kann hierbei einerseits derart erfolgen, dass nach einem anhand der Zunahme der besagten Differenz erkannten Schallereignis als "Trigger" eine konstante Abschwächung angewandt wird, sobald die Differenz zwischen der ersten Pegelmessung und der zweiten Pegelmessung wieder unter einen vorgegeben Grenzwert gefallen ist, weil dann davon ausgegangen wird, dass das Abklingverhalten des Schallereignisses vorliegt, also insbesondere sein akustischer Nachhall, welches dazu führt, dass die Differenz der Pegelmessungen verschwindet. Andererseits kann nach einem erkannten Schallereignis auch die Abschwächung mit zunehmender Zeit in vorgegebener Weise und ggf. in Abhängigkeit des Maximalpegels des Schallereignisses als Referenzgröße erhöht werden, was die Beiträge des akustischen Nachhalls im Audiosignal weiter verkürzt.

Erfindungsgemäß wird die erste Pegelmessung derart gewählt, dass sie ein exponentielles Abklingverhalten aufweist. Dabei wird auch die zweite Pegelmessung mit einem exponentiellem Abklingverhalten gewählt. Unter einem exponentiellen Abklingverhalten ist hierbei insbesondere zu verstehen, dass nach einem Schallereignis mit einem klar definierten Ende der durch die jeweilige Pegelmessung ausgegebene Pegel-Wert mit zunehmender Zeit exponentiell abnimmt, bzw. in logarithmische Skalierung linear in der Zeit abnimmt. Dies hat den besonderen Vorteil, dass das Abklingverhalten der ersten Pegelmessung das reale Abklingverhalten von akustischem Nachhall widerspiegelt.

In einer realen akustischen Situation kann ein Schallereignis an Wänden und Objekten eines Raumes reflektiert werden, wobei zu einer gegebenen Umgebung der jeweils reflektierte Schall vom Schalldruckpegel des ursprünglichen Schallereignisses abhängt. Der reflektierte Schall kann seinerseits erneut an weiteren Wänden und Objekten reflektiert werden, wobei der Schall-Anteil der erneuten Reflexion ebenfalls vom Schall-Pegel der ersten Reflexion abhängt. Resultat dieser Abhängigkeiten für sukzessive Reflexionen ist ein exponentielles Abklingverhalten des Schallereignisses in der realen akustischen Situation. Durch eine Wahl der ersten Pegelmessung mit einem ebenfalls exponentiellen Abklingverhalten kann die erste Pegelmessung bei einer geeigneten Auswahl der zugehörigen ersten Abklingzeit so eingestellt werden, dass die erste Pegelmessung im Wesentlichen das Abklingverhalten der realen akustischen Situation, welche dem Audiosignal zugrunde liegt, reproduziert.

Erfindungsgemäß wird dabei die erste Pegelmessung durch ein rekursives Tiefpass-Filter erster Ordnung implementiert. Ein derartiges Filter liefert das gewünschte exponentielle Abklingverhalten. Dabei wird auch die zweite Pegelmessung durch ein rekursives Tiefpass-Filter erster Ordnung implementiert.

Zweckmäßigerweise wird als erste Abklingzeit der ersten Pegelmessung eine physikalische Abkling-Zeitkonstante für eine Umgebung gewählt, in welcher das Audiosignal zur Bereitstellung erzeugt wurde. Unter der Erzeugung des Audiosignals ist hierbei insbesondere eine entsprechende Umsetzung der realen akustischen Situation mittels geeigneter Wandler zu verstehen. Als Abkling - Zeitkonstante kann dabei beispielsweise T60 als diejenige Zeit herangezogen werden, in welcher der Schallpegel um 60 dB abgesunken ist.

Als weiter vorteilhaft erweist es sich, wenn ein Rauschhintergrund des Audiosignals ermittelt wird, wobei das Abschwächen des Audiosignals in Abhängigkeit vom Rauschhintergrund des Audiosignals gesteuert wird, und besonders bevorzugt in Abhängigkeit des Rauschhintergrundes modifiziert, angewandt, ausgesetzt oder auch wieder eingesetzt wird. Insbesondere kann zur Bestimmung des Rauschhintergrundes eine Kenntnis von Schallereignissen, welche aus der ersten Pegelmessung und/oder der zweiten Pegelmessung gewonnen wird, herangezogen werden, sodass beispielsweise erkannte Schallereignisse, welche einen Mindest-Pegel überschreiten, nicht als Rauschen interpretiert werden. Der Rauschhintergrund des Audiosignals kann aber auch auf andere dem Fachmann bekannte Art ermittelt werden. Ein Modifizieren, insbesondere in Form einer entsprechend geringeren Anwendung des Abschwächens des Audiosignals in Abhängigkeit vom Rauschhintergrund bei der Unterdrückung des akustischen Nachhalls kann hierbei verhindern, dass durch eine festgestellten akustischen Nachhall das Audiosignal unter seine eigentlichen, im Mittel vorliegenden Rauschanteile abgesenkt bzw. "gedrückt" wird, was gegebenenfalls als unnatürlich empfunden werden könnte.

Besonders bevorzugt wird im Audiosignal dabei eine Rauschunterdrückung durchgeführt, wobei das Steuern der Abschwächung zusätzlich in Abhängigkeit der Rauschunterdrückung erfolgt. Dies bedeutet insbesondere, dass das Audiosignal nicht unter den Rauschhintergrund abgesenkt werden soll, wie er im Audiosignal nach der angewandten Rauschunterdrückung vorliegt.

Die Erfindung nennt weiter ein Verfahren zur Unterdrückung eines akustischen Nachhalls in einem Audiosignal eines Hörgerätes, wobei anhand eines Eingangswandlers des Hörgerätes aus einem Schallsignal der Umgebung das Audiosignal bereitgestellt wird, und wobei im Audiosignal ein akustischer Nachhall durch das vorbeschriebene Verfahren unterdrückt wird, sowie ein Hörgerät mit einem Eingangswandler zur Erzeugung eines Audiosignals und einer Signalverarbeitungseinheit, welche zur Durchführung des vorbeschriebenen Verfahrens eingerichtet ist. Die für das Verfahren zur Unterdrückung eines akustischen Nachhalls in einem Audiosignal und für seine Weiterbildungen angegebenen Vorteile können dabei sinngemäß auf das Verfahren im Hörgerät und auf das Hörgerät selbst übertragen werden.

Nachfolgend wird ein Ausführungsbeispiel der Erfindung anhand von Zeichnungen näher erläutert. Hierbei zeigen jeweils schematisch:
- Fig. 1: in einem Zeitdiagramm eine erste Pegelmessung und eine zweite Pegelmessung desselben Audiosignals mit identischen Einregelzeiten und jeweils unterschiedlichen Abklingzeiten,
- Fig. 2: in einem Zeitdiagramm eine erste Pegelmessung und eine zweite Pegelmessung desselben Audiosignals mit identischen Abklingzeiten und jeweils unterschiedlichen Einregelzeiten, und
- Fig. 3: in einem Blockdiagramm ein Hörgerät.

Einander entsprechende Teile und Größen sind in allen Figuren jeweils mit gleichen Bezugszeichen versehen.

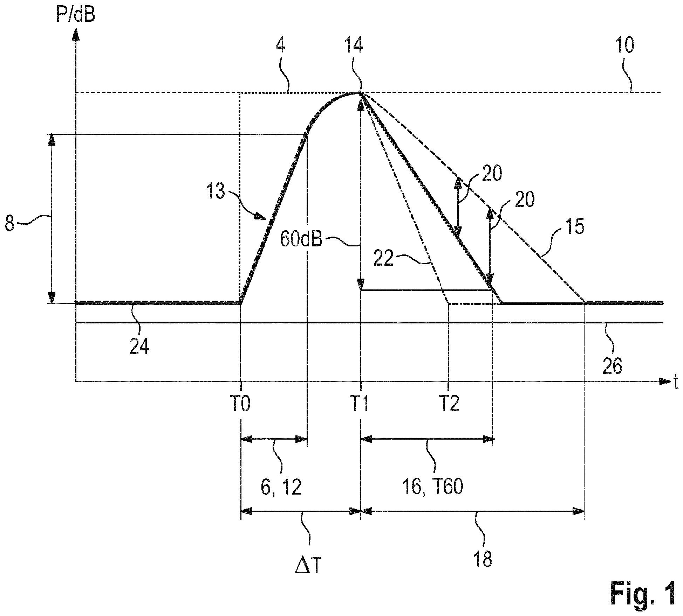

In Figur 1 sind schematisch in einem Zeitdiagramm gegen eine Zeit t die Pegelwerte P einer ersten Pegelmessung 1 (durchgezogene Linie) und einer zweiten Pegelmessung 2 (gestrichelte Linie) dargestellt, die jeweils an einem nicht näher gezeigten Audiosignal durchgeführt werden. Zur einem Zeitpunkt T0 liegt im Audiosignal ein isoliertes Schallereignis 4 (gepunktete Linie) vor, welches einerseits ein klar definiertes Ende aufweist, und andererseits aufgrund der physikalischen Umgebung, in welcher das Audiosignal zur Erzeugung aufgezeichnet wurde, Beiträge von akustischem Nachhall im Audiosignal hervorruft. Das Schallereignis 4 soll hierbei nur eine sehr kurze Zeitdauer ΔT aufweisen. In dieser Zeitdauer ΔT ist somit die gesamte Schallenergie des Schallereignisses 4 konzentriert. Dies kann beispielsweise bei einem Knall, einem Schlag, einem Klatschen oder ähnlichem Geräuschen von sehr kurzer Dauer der Fall sein.

Die erste Pegelmessung 1 weist eine erste Einregelzeit 6 auf, welche nach dem Zeitpunkt T0, zu welchen das Schallereignis 4 einsetzt, verstreicht, bis die erste Pegelmessung eine vorgegebenen Anteil 8 des asymptotischen Pegels 10 eingenommen hat, wobei der asymptotische Pegel 10 demjenigen Pegel entspricht, welchen die erste Pegelmessung für ein stationäres, kontinuierliches Schallereignis mit einem zum Schallereignis 4 identischen Signalpegel einnehmen würde. Die zweite Einregelzeit 12 der zweiten Pegelmessung 2 ist vorliegend identisch zur ersten Einregelzeit 6 der ersten Pegelmessung.

Aus diesem Grund weisen die erste Pegelmessung 1 und die zweite Pegelmessung 2 dasselbe Einregelverhalten 13 auf, und nehmen somit zum Zeitpunkt T1, welcher das Ende der Zeitdauer ΔT und somit das Ende des Schallereignisses 4 markiert, den selben Maximalwert 14 für den Pegel ein, welcher knapp unter dem asymptotischen Pegel 10 liegt. Zum Zeitpunkt T1 setzt nun in der realen akustischen Situation, welche durch das Audiosignal abgebildet wird, dass vom Nachhall geprägte Abklingverhalten ein, sodass auch die erste Pegelmessung 1, und die zweite Pegelmessung 2 nun gemäß der jeweiligen Abklingzeit in ihr Abklingverhalten 15 übergehen.

Die erste Pegelmessung 1 weist hierbei eine erste Abklingzeit 16 auf, welche genau der Abklingen-Zeitkonstante T60 entspricht, nach welcher der Schallpegel vom Maximalwert 14 um 60 dB abgenommen hat. Die zweite Pegelmessung 2 weist eine zweite Abklingzeit 18 auf, welche größer ist als die erste Abklingzeit 16. Aus diesem Grund ist für die erste Pegelmessung 1 die Gerade, welche in der logarithmischen Skalierung des Diagramms der Figur 1 das exponentielle Abklingverhalten beschreibt, entsprechend steiler als die Gerade, welche das Abklingverhalten der zweiten Pegelmessung 2 beschreibt.

Bildet man nun die Differenz 20 aus der ersten Pegelmessung 1 und der zweiten Pegelmessung 2, so kann diese Differenz 20 dahingehend für eine Unterdrückung des Anteils an akustischem Nachhall im Audiosignal verwendet werden, dass das Audiosignal in einer monoton steigenden Abhängigkeit von dieser Differenz 20 abgeschwächt wird. In Figur 1 ist hierfür schematisch der Schallpegel des aus dieser Abschwächung resultierenden Audiosignals 22 (gestrichpunktete Linie) dargestellt.

Die Abschwächung wird dabei nur bis zu einem Rauschhintergrund 24 des Audiosignals durchgeführt, und somit zum Zeitpunkt T2, bei welchen das abgeschwächte Audiosignal 22 infolge einer weiteren Abschwächung gemäß der Differenz 20 aus der ersten Pegelmessung 1 und der zweiten Pegelmessung 2 unter den Rauschhintergrund 24 fallen würde, gemäß dem Rauschhintergrund 24 zunehmend zurückgenommen. Insbesondere kann die erwähnte Rücknahme der Abschwächung statt in Abhängigkeit vom Rauschhintergrund 24 auch in Abhängigkeit eines residualen Rauschhintergrundes 26 vorgenommen werden, welcher bei einer vorgenommenen Rauschunterdrückung durch das verbleibende Restrauschen gebildet wird.

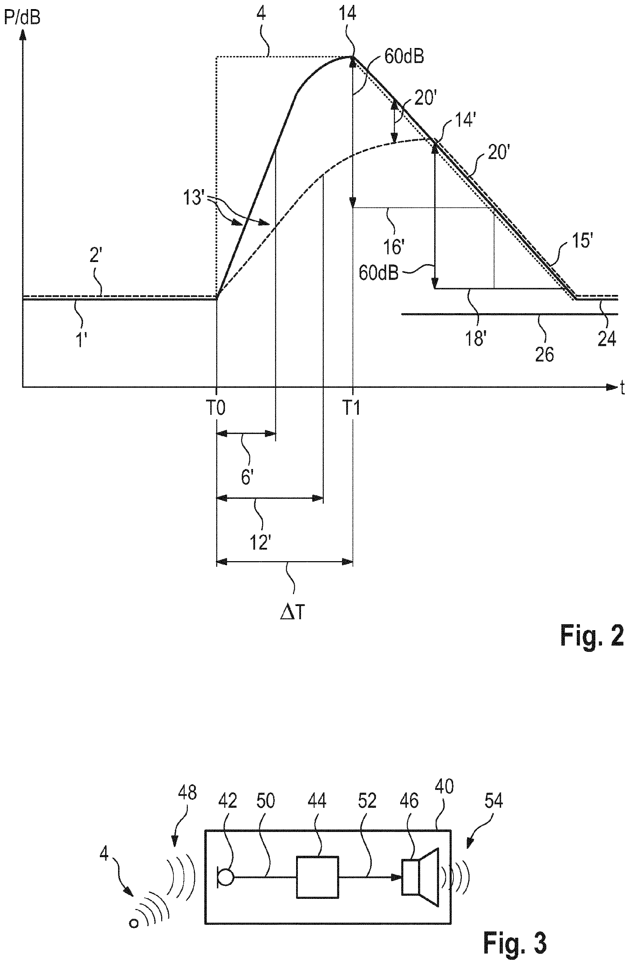

In Figur 2 sind in einer nicht von der Erfindung umfassten Ausführung schematisch in einem Zeitdiagramm gegen eine Zeit t die Pegelwerte P einer ersten Pegelmessung 1' (durchgezogene Linie) und einer zweiten Pegelmessung 2' (gestrichelte Linie) eines Audiosignals dargestellt, welche auf ein Schallereignis 4 (gepunktete Linie) reagieren, wobei das Schallereignis zu einem Zeitpunkt T0 einsetzt und nach einer Zeitdauer ΔT zum Zeitpunkt T1 wieder beendet ist. In Figur 2 ist nun die erste Einregelzeit 6' kürzer als die zweite Einregelzeit 12'. Dies führt dazu, dass zum Zeitpunkt T1 der von der ersten Pegelmessung 1' eingenommene Maximalwert 14 deutlich über dem Maximalwert 14' der zweiten Pegelmessung 2' liegt. Der Maximalwert 14' der Zweiten Pegelmessung 2' wird von dieser zudem erst zu einem Zeitpunkt später als T1 eingenommen. Die Differenz 20' geht, also bereits während des Einregelverhaltens 13' der beiden Pegelmessungen 1', 2' erheblich auseinander. Hieran kann nun das Schallereignis 4 erkannt werden.

Die erste Abklingzeit 16' der ersten Pegelmessung 1' ist vorliegend identisch zur zweiten Abklingzeit 18' der zweiten Pegelmessung 2', und wird erneut als die Abklingen-Zeitkonstante T60 gewählt (vergleiche Figur 1). Nach besagtem Erkennen des Schallereignisses 4 anhand der schlagartig auseinandergehenden Differenz 20' der beiden Pegelmessungen 1', 2' nach dem Zeitpunkt T0 nimmt die Differenz der beiden Pegelmessungen 1', 2' wieder ab, da unmittelbar nach dem Zeitpunkt T1 die erste Pegelmessung 1' bereits in ihr Abklingverhalten übergegangen ist. Die zweite Pegelmessung 2` regelt dabei zunächst noch weiter auf den abklingenden akustischen Nachhall des Schallereignisses 4 ein, bis der Maximalwert 14` der zweiten Pegelmessung 2` den realen instantanen Pegel des abklingenden akustischen Nachhalls des Schallereignisses 4 erreicht hat. Aus der Abnahme der Differenz 20' ab dem Zeitpunkt T1 kann entsprechend darauf geschlossen werden, dass das Schallereignis 4 nun beendet ist, und lediglich sein Abklingverhalten 15' im Audiosignal vorliegt. In diesem Fall kann auf das Audiosignal eine vorgegebene Abschwächung bei einem abnehmenden Verlauf der Differenz 20' angewandt werden, sofern zuvor das Auftreten des Schallereignisses 4 anhand der schlagartigen Vergrößerung der Differenz 20' erkannt wurde. Erneut ist, wie anhand von Figur 1 beschrieben, ein Modifizieren oder eine Rücknahme der Abschwächung des Audiosignals zur Unterdrückung von akustischem Hall in Abhängigkeit vom Rauschhintergrund 24 oder vom residualen Rauschhintergrund 26 möglich.

Die anhand von Fig. 1 und anhand von Fig. 2 dargestellten Verfahren zur Unterdrückung des akustischen Nachhalls im Audiosignal können hierbei insbesondere frequenzbandweise durchgeführt werden. Dazu wird das Audiosignal jeweils in einzelne Frequenzbänder aufgeteilt, in welchen jeweils die erste und die zweit Pegelmessung 1, 1', 2, 2' wie dargestellt durchgeführt werden. Die Abschwächung des Audiosignals kann dann für jedes Frequenzband einzeln anhand der in diesem Frequenzband ermittelten Differenz 20, 20' in Abhängigkeit der jeweiligen Einregelverhalten 13, 13' und der Abklingverhalten 15, 15' gesteuert werden.

In Figur 3 ist schematisch in einem Blockdiagramm ein Hörgerät 40 dargestellt, welches einen Eingangswandler 42, eine Signalverarbeitungseinheit 44, und eine Ausgangswandler 46 aufweist. Der Eingangswandler 42, welcher vorliegend durch ein Mikrofon gegeben ist, erzeugt aus einem Schallsignal 48 der Umgebung, in welches auch ein konkretes Schallereignis 4 eingeht, dass Audiosignal 50. Ein akustischer Nachhall des Schallsignals 4 im Audiosignal 50 kann nun in der anhand von Figur 1 oder der anhand von Figur 2 beschriebenen Weise in der Signalverarbeitungseinheit 44 unterdrückt werden. Das hieraus resultierende Signal wird weiterverarbeitet, insbesondere einer Dynamik-Kompression sowie einer frequenzbandabhängigen Verstärkung unterworfen, und hieraus ein Ausgangssignal 52 erzeugt, welches durch den Ausgangswandler 46 in ein Ausgangsschallsignal 54 umgewandelt wird.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1, 1`: erste Pegelmessung
- 2, 2`: zweite Pegelmessung
- 4: Schallereignis
- 6, 6': erste Einregelzeit
- 8: vorgegebener Anteil
- 10: asymptotischer Pegel
- 12, 12': zweite Einregelzeit
- 13, 13': Einregelverhalten
- 14, 14': Maximalwert
- 15, 15': Abklingverhalten
- 16, 16': erste Abklingzeit
- 18, 18': zweite Abklingzeit
- 20, 20': Differenz
- 22: abgeschwächtes Audiosignal
- 24: Rauschhintergrund
- 26: residualer Rauschhintergrund
- 40: Hörgerät
- 42: Eingangswandler
- 44: Signalverarbeitungseinheit
- 46: Ausgangswandler
- 48: Schallsignal
- 50: Audiosignal
- 52: Ausgangssignal
- 54: Ausgangsschallsignal
- ΔT: (Zeit-)Dauer
- P: Pegelwerte
- t: Zeit
- T0, T1, T2: Zeitpunkt
- T60: Abkling-Zeitkonstante

## Patentansprüche

1. Verfahren zur Unterdrückung eines akustischen Nachhalls in einem Audiosignal (50),
wobei ein Audiosignal (50) bereitgestellt wird,
wobei eine erste Pegelmessung (1) des Audiosignals (50), welche derart gewählt wird, dass die erste Pegelmessung (1) ein exponentielles Abklingverhalten (15) aufweist, und welche durch ein rekursives Tiefpass-Filter erster Ordnung implementiert wird, mit einer ersten Einregelzeit (6) und mit einer ersten Abklingzeit (6) durchgeführt wird,
wobei wenigstens zeitweise während der ersten Pegelmessung (1) eine zweite Pegelmessung (2) des Audiosignals (50), welche derart gewählt wird, dass die zweite Pegelmessung (2) ein exponentielles Abklingverhalten (15) aufweist, und welche durch ein rekursives Tiefpass-Filter erster Ordnung implementiert wird, mit einer zur ersten Einregelzeit (6) identischen zweiten Einregelzeit (12) und mit einer zweiten Abklingzeit (12) durchgeführt wird, welche größer als die erste Abklingzeit (6) ist,
wobei auf einen Beitrag eines Schallereignisses (4) im Audiosignal (50) hin ein akustischer Nachhall des Schallereignisses (4) im Audiosignal (50) durch ein Abschwächen des Audiosignals (50) unterdrückt wird, und
wobei das Abschwächen des Audiosignals (50) zur Unterdrückung des akustischen Nachhalls im Audiosignal (50) mittels einer monoton steigenden Funktion der Differenz (20) aus der der ersten Pegelmessung (1) und der zweiten Pegelmessung (2) gesteuert wird.

2. Verfahren nach Anspruch 1,
wobei als erste Abklingzeit (16) der ersten Pegelmessung (1) eine physikalische Abkling-Zeitkonstante (T60) für eine Umgebung gewählt wird, in welcher das Audiosignal (50) zur Bereitstellung erzeugt wurde.

3. Verfahren nach Anspruch 1 oder Anspruch 2,
wobei ein Rauschhintergrund (24) des Audiosignals (50) ermittelt wird, und
wobei das Abschwächen des Audiosignals (50) in Abhängigkeit vom Rauschhintergrund (24) des Audiosignals (50) gesteuert wird.

4. Verfahren nach Anspruch 3,
wobei im Audiosignal (50) eine Rauschunterdrückung durchgeführt wird, und
wobei die Steuerung der Abschwächung zusätzlich in Abhängigkeit der Rauschunterdrückung erfolgt.

5. Verfahren nach einem der vorhergehenden Ansprüche,
wobei das Audiosignal (50) in eine Mehrzahl an Frequenzbändern zerlegt wird, wobei die erste Pegelmessung (1) und die zweite Pegelmessung (2) jeweils frequenzbandweise durchgeführt werden,
wobei das Audiosignal (50) zur Unterdrückung des akustischen Nachhalls frequenzbandweise abgeschwächt wird, und
wobei das Abschwächen in Abhängigkeit der Differenz (20) zwischen der ersten Pegelmessung (1) und der zweiten Pegelmessung (2) im jeweiligen Frequenzband gesteuert wird.

6. Verfahren zur Unterdrückung eines akustischen Nachhalls in einem Audiosignal (50) eines Hörgerätes (40),
wobei anhand eines Eingangswandlers (42) des Hörgerätes (40) aus einem Schallsignal (48) der Umgebung das Audiosignal (50) bereitgestellt wird, und
wobei im Audiosignal (50) ein akustischer Nachhall durch ein Verfahren nach einem der vorhergehenden Ansprüche unterdrückt wird.

7. Hörgerät (40) mit einem Eingangswandler (42) zur Erzeugung eines Audiosignals (50) und einer Signalverarbeitungseinheit (44), welche zur Durchführung des Verfahrens nach einem der Ansprüche 1 bis 5 eingerichtet ist.

## Claims

1. A method of suppressing an acoustic reverberation in an audio signal (50),
wherein an audio signal (50) is provided,
wherein a first level measurement (1) of the audio signal (50) is performed with a first settling time (6) and with a first decay time (6), said first level measurement (50) being selected such that the first level measurement (1) has an exponential decay behaviour (15) and which being implemented by a recursive first-order low-pass filter, wherein at least temporarily during the first level measurement (1), a second level measurement (2) of the audio signal (50) out with a second settling time (12) identical to the first settling time (6) and with a second decay time (12) which is greater than the first decay time (6), said second level measurement (2) being selected in such a way that the second level measurement (2) has an exponential decay behaviour (15) and being implemented by a recursive low-pass filter of the first order, wherein, upon a contribution of a sound event (4) in the audio signal (50), an acoustic reverberation of the sound event (4) in the audio signal (50) is suppressed by attenuating the audio signal (50), and
wherein the attenuation of the audio signal (50) for suppressing the acoustic reverberation in the audio signal (50) is controlled by means of a monotonically increasing function of the difference (20) from the first level measurement (1) and the second level measurement (2).

2. The method according to claim 1,
wherein as the first decay time (16) of the first level measurement (1), a physical decay time constant (T60) is selected for an environment in which the audio signal (50) was generated for said providing.

3. The method according to claim 1 or claim 2,
wherein a noise background (24) of the audio signal (50) is determined, and
wherein the attenuation of the audio signal (50) is controlled in dependence on the noise background (24) of the audio signal (50).

4. The method according to claim 3,
wherein a noise reduction is performed in the audio signal (50), and
wherein the control of the attenuation is additionally performed in dependence on the noise reduction.

5. The method according to any one of the preceding claims,
wherein the audio signal (50) is decomposed into a plurality of frequency bands,
wherein the first level measurement (1) and the second level measurement (2) are each performed in a frequency band-wise way,
wherein the audio signal (50) is attenuated for suppressing the acoustic reverberation in a frequency band-wise way, and
wherein the attenuation is being controlled as a function of the difference (20) between the first level measurement (1) and the second level measurement (2) in the respective frequency band.

6. Method for suppressing an acoustic reverberation in an audio signal (50) of a hearing aid (40),
wherein the audio signal (50) is provided from a sound signal (48) of the environment by means of an input transducer (42) of the hearing aid (40), and
wherein an acoustic reverberation is suppressed in the audio signal (50) by a method according to one of the preceding claims.

7. A hearing aid (40), comprising an input transducer (42) for generating an audio signal (50) and a signal processing unit (44) configured to perform the method according to any one of claims 1 to 5.

## Revendications

1. Procédé de suppression d'une réverbération acoustique dans un signal audio (50),
dans lequel un signal audio (50) est fourni,
dans lequel une première mesure de niveau (1) du signal audio (50), qui est choisie de telle sorte que la première mesure de niveau (1) comprend un comportement de décroissance exponentielle (15), et qui est mise en oeuvre par un filtre passe-bas récursif du premier ordre, est effectuée avec un premier temps de réglage (6) et avec un premier temps de décroissance (6),
dans lequel, au moins temporairement pendant la première mesure de niveau (1), une deuxième mesure de niveau (2) du signal audio (50), qui est choisie de telle sorte que la deuxième mesure de niveau (2) comprend un comportement de décroissance exponentiel (15) et qui est mise en oeuvre par un filtre passe-bas récursif de premier ordre, est effectuée avec un deuxième temps de réglage (12) identique au premier temps de réglage (6) et avec un deuxième temps de décroissance (12), qui est supérieur au premier temps de décroissance (6),
dans lequel, en réponse à une contribution d'un événement sonore (4) dans le signal audio (50), une réverbération acoustique de l'événement sonore (4) dans le signal audio (50) est supprimée par une atténuation du signal audio (50), et
dans lequel l'atténuation du signal audio (50) pour supprimer la réverbération acoustique dans le signal audio (50) est commandée au moyen d'une fonction croissante monotone de la différence (20) entre la première mesure de niveau (1) et la deuxième mesure de niveau (2).

2. Procédé selon la revendication 1,
dans lequel on choisit comme premier temps de décroissance (16) de la première mesure de niveau (1) une constante de temps de décroissance physique (T60) pour un environnement dans lequel le signal audio (50) a été généré pour être fourni.

3. Procédé selon la revendication 1 ou la revendication 2,
dans lequel un fond de bruit (24) du signal audio (50) est déterminé, et
dans lequel l'atténuation du signal audio (50) est commandée en fonction du fond de bruit (24) du signal audio (50).

4. Procédé selon la revendication 3,
une réduction de bruit étant effectuée dans le signal audio (50), et
la commande de l'atténuation étant en outre effectuée en fonction de la réduction du bruit.

5. Procédé selon l'une des revendications précédentes,
dans lequel le signal audio (50) est décomposé en une pluralité de bandes de fréquences,
la première mesure de niveau (1) et la deuxième mesure de niveau (2) étant respectivement effectuées par bande de fréquence,
le signal audio (50) étant atténué par bande de fréquence pour supprimer la réverbération acoustique, et
l'atténuation étant commandée en fonction de la différence (20) entre la première mesure de niveau (1) et la deuxième mesure de niveau (2) dans la bande de fréquence respective.

6. Procédé de suppression d'une réverbération acoustique dans un signal audio (50) d'un appareil auditif (40),
le signal audio (50) étant mis à disposition à l'aide d'un transducteur d'entrée (42) de l'appareil auditif (40) à partir d'un signal sonore (48) de l'environnement, et
une réverbération acoustique étant supprimée dans le signal audio (50) par un procédé selon l'une des revendications précédentes.

7. Appareil auditif (40) comprenant un transducteur d'entrée (42) pour générer un signal audio (50) et une unité de traitement de signal (44), qui est agencée pour mettre en oeuvre le procédé selon l'une des revendications 1 à 5.
